# EUROPEAN PATENT SPECIFICATION

(11) **EP 1 925 207 B1**
(45) Date of publication and mention of the grant of the patent: **02.11.2016**
(21) Application number: 06810180.7
(22) Date of filing: 15.09.2006
(51) Int. Cl.: A23C 3/02, A23C 9/13

(54) **METHOD OF IMPROVING THE TEXTURE OF FERMENTED MILK**
VERFAHREN ZUR VERBESSERUNG DER TEXTUR VON FERMENTIERTER MILCH
MÉTHODE D'AMÉLIORATION DE LA TEXTURE DU LAIT FERMENTÉ

(30) Priority: 16.09.2005 JP 2005270645
(43) Date of publication of application: 28.05.2008
(60) Divisional application: 11177846.0
(73) Proprietor: Meiji Co., Ltd., Tokyo (JP)
(72) Inventor: HORIUCHI, Hiroshi, Odawara-shi Kanagawa 250-0862 (JP); OHTOMO, Hideo, Odawara-shi Kanagawa 250-0862 (JP); ECHIZEN, Hiroshi, Odawara-shi Kanagawa 250-0862 (JP)
(74) Representative: Care, Alison
(86) International application number: PCT/JP2006/318338
(87) International publication number: WO 2007/032459

(56) References cited:
- WO-A1-02/060279
- WO-A1-2004/091306
- JP-A- 2002 291 404
- REMEUF ET AL.: "Preliminary observations on the effects of milk fortification and heating on microstructure and physical properties of stirred yogurt", INTERNATIONAL DAIRY JOURNAL, vol. 13, no. 9, 2003, pages 773-782, XP002631264,
- HERRERO ET AL.: "The effect of supplementing goats milk with whey protein concentrate on textural properties of set-type yoghurt", INTERNATIONAL JOURNAL OF FOOD SCIENCE & TECHNOLOGY, vol. 41, no. 1, January 2006 (2006-01), pages 87-92, XP002631265,
- PATOCKA ET AL: "Rheological behaviour of dairy products as affected by soluble whey protein isolate", INTERNATIONAL DAIRY JOURNAL, ELSEVIER APPLIED SCIENCE, BARKING, GB, vol. 16, no. 5, 1 May 2006 (2006-05-01), pages 399-405, XP005250287, ISSN: 0958-6946, DOI: DOI:10.1016/J.IDAIRYJ.2005.05.010
- HOLT ET AL.: "Apparent chemical composition of nine commercial or semi-commercial whey protein concentrates, isolates and fractions", INTERNATIONAL JOURNAL OF FOOD SCIENCE & TECHNOLOGY, vol. 34, no. 5/6, 1999, pages 543-556, XP002631266,

## Description

### Field of the Invention

The present invention relates to a method for producing set-type yogurt. More specifically, the present invention relates to a method for producing set-type yogurt using α-lactalbumin and a set-type yogurt produced by the production method.

### Description of the Related Art

Fermented milk is generally classified into set type yogurt (solid fermented milk), soft yogurt (pasty fermented milk), and drink yogurt (liquid fermented milk). Especially for the set type yogurt, it is important to obtain solid texture that will not lose shape during the transportation of the product in order to increase commercial value of the fermented milk. From such a point of view, addition of whey protein such as whey protein concentrate (WPC) and whey protein isolate (WPI) to raw materials in the process of producing the fermented milk has been known.

For example, Japanese Patent Application Laid-Open Publication No. Hei 9-94059 (see patent document 1 below) discloses a method for producing yogurt that is stable against vibration by adding partial heat-denatured whey protein to raw milk in the process of producing the yogurt.

Also, Japanese Patent Application Laid-Open Publication No. 2004-283047 (see patent document 2 below) discloses that yogurt with high shape retention can be produced by using whey protein having character of coagulate by heat and milk peptide, and that the curd can be prevented from crumbling due to vibration during transportation of the product.

However, as described in paragraph [0006] of Japanese Patent Application Laid-Open Publication No. 2004-283047 (see patent document 2 below), in order to obtain fermented milk with sufficient toughness (hardness), it is required to add whey protein in large quantity. Addition of large quantity of whey protein results in increasing constituents other than raw milk, so that there is a problem that the flavor and texture of the yogurt significantly deteriorate.

Hardness of fermented milk is also affected by sterilization conditions during sterilization process. In the conventional method for producing fermented milk, it has been necessary to undergo high temperature short time (HTST) processing, while performing ultra high temperature (UHT) processing has been disadvantageous since the hardness of the fermented milk obtained is significantly reduced. From such a point of view, the HTST has been adopted when producing the fermented milk. However, the HTST has a disadvantage of not being suitable for producing fermented milk for which fermentation is performed for a long time. When performing the fermentation for a long time, heat-resistant bacteria (such as sporeformers) that are impossible to kill by the HTST increase during the fermentation, so that there are problems that the flavor degenerate and the quality degrades. JP 2002/291404 discloses a method for producing yogurt. The method comprises the use of high temperature short time (HTST) processing.
[Patent document 1] Japanese Patent Application Laid-Open Publication No. 9-94059
[Patent document 2] Japanese Patent Application Laid-Open Publication No. 2004-283047

### Disclosure of the Invention

### Problems to be solved by the Invention

An object of the present invention is to provide a novel method for producing set-type yogurt which is capable of obtaining constant hardness. Specifically, an object of the present invention is to provide a method for producing set-type yogurt which is capable of maintaining the hardness even if ultra high temperature (UHT) processing is applied.

Another object of the present invention is to provide a method for producing set-type yogurt which maintains the hardness while reducing the amount of whey protein concentrate used.

Yet another object of the present invention is to provide a set type yogurt which has new composition with excellent hardness or flavor.
In a first aspect, the invention provides a method for producing set type yogurt, the method comprising the steps of:
sterilizing yogurt mix in an ultra high temperature sterilization process, the yogurt mix containing 0.3 % by weight or more of α-lactalbumin based on total weight of the yogurt mix; cooling the sterilized yogurt mix; and fermenting the cooled yogurt mix, characterized in that the ultra high temperature sterilization process is a process for heating the yogurt mix at a temperature of 120 to 140 degrees Celsius for 1 second to 5 minutes.

In a second aspect, the invention provides set type yogurt produced from a yogurt mix by the method for producing set type yogurt according to the first aspect of the invention, wherein the yogurt mix comprises 0.3 % by weight or more of α-lactalbumin and either (i) comprises milk solid not fat, the weight ratio between the α-lactalbumin and the milk solid not fat (α-La/SNF) being 0.035 or more, or (ii) has a weight ratio between α-lactalbumin and β-lactoglobulin that is between 1.5 and 4 inclusive, or (iii) comprises the features defined in (i) and (ii).

The yogurt mix may comprise whey protein concentrate which comprises 60% by weight of more of α-lactalbumin based on total protein.

### Means for solving the problems

The method for producing set-type yogurt according to the first aspect of the present invention is essentially based on an idea that set-type yogurt with excellent hardness or flavor can be produced by using raw material highly containing α-lactalbumin (α-La) or by using WPC highly containing α-La as raw material. Another concept of the first aspect of the present invention is that, when yogurt mix containing a certain amount of α-La is used to produce set-type yogurt, set-type yogurt with higher hardness can be produced by applying ultra high temperature (UHT) processing than by applying high temperature short time (HTST) processing.

The method for producing set-type yogurt according to the first aspect of the present invention specifically relates to a method for producing set-type yogurt which uses yogurt mix containing 0.3 % by weight or more α-lactalbumin in gross weight and the like. Except for the yogurt mix, processes in the publicly known method for producing fermented milk can be adopted as appropriate. As demonstrated by Example 4 and the like, by using yogurt mix (fermented milk mix) highly containing α-lactalbumin, set-type yogurt having ideal hardness can be produced. Also, as demonstrated by Example 3 and Example 4, in the case of using yogurt mix containing the predetermined amount of α-lactalbumin, the hardness of the set-type yogurt obtained is increased when the ultra high temperature processing is intentionally applied. Moreover, as demonstrated by Example 5, set-type yogurt having desirable hardness can also be obtained by using yogurt mix containing α-lactalbumin to which the ultra high temperature processing is applied.

The set-type yogurt produced by the method according to the first aspect of the present invention has desirable hardness. Further, the set-type yogurt does not lose flavor since components because it contains little ingredient that is not raw milk. Thus, the set-type yogurt is favorable. Furthermore, the set-type yogurt produced by applying the UHT has high hardness while effectively preventing the situation where not only viable bacteria but also heat-resistant bacteria (such as sporeformers) increases, the flavor does not get lost, and is high quality set-type yogurt. The set-type yogurt produced by the method according to the first aspect of the present invention, is set-type yogurt specifically containing 0.3 % by weight or more α-lactalbumin.

Also disclosed herein is a method for producing fermented milk based on a concept that we can produce fermented milk with high hardness by using yogurt mix which has β-lactoglobulin (β-Lg) added thereto or yogurt mix containing whey protein concentrate (WPC) which highly contains β-Lg.

Specifically, such a method for producing fermented milk uses yogurt mix containing whey protein concentrate containing 65 % by weight or more β-lactoglobulin based on total protein and the like. Except for the yogurt mix, processes in the publicly known method for producing fermented milk can be adopted as appropriate. As demonstrated by Example 1 and the like which will be described later, when the WPC highly containing β-Lg is used as ingredient, fermented milk with
sufficient hardness can be produced by adding a smaller amount of WPC compared to that in case of using normal WPC.

Another example of a method for producing fermented milk disclosed herein is a method for producing fermented milk, wherein β-lactoglobulin is added to starting milk mixture so as to use yogurt mix containing 0.4 % by weight or more β-lactoglobulin based on total amount of the yogurt mix. As demonstrated by Example 2 and Example 4 which are described later, we can produce fermented milk with sufficient hardness by using yogurt mix containing the predetermined amount of β-lactoglobulin.

Fermented milk produced by such a method has desirable hardness, and is favorable fermented milk since the component other than raw milk are relatively less so that the flavor does not get lost.

### Effect of the Invention

According to the present invention, it is provided that a novel method for producing set-type yogurt capable of obtaining constant hardness. Specifically, according to the method of the first aspect of the present invention, by making the α-La contained in the ingredient a constant amount or by using the WPC prepared so that α-La is highly contained in the ingredient, we can produce set-type yogurt with high hardness. Further, according to the aspect, we can reduce the amount of whey protein to be added to the starting milk mixture. Moreover, we can kill not only the viable bacteria but also the heat-resistant bacteria (such as sporeformers) effectively by the UHT. Further, according to the aspect, we can prevent the situation where the viable bacteria and the heat-resistant bacteria increase during the fermenting process. Thus, the method of the aspect can provide set-type yogurt with excellent flavor and quality.

It is also disclosed that we can produce fermented milk with sufficient hardness, even if the amount of whey protein contained in the fermented milk is small, by adding β-Lg to the starting milk mixture or by using yogurt mix including the WPC prepared so that β-Lg is highly contained.

Also, the fermented milk produced by the above-mentioned method for producing fermented milk is fermented milk containing more α-La or less β-Lg compared to the conventional fermented milk. The fermented milk produced by the above method has better flavor and taste compared to the conventional fermented milk. Specifically, since the fermented milk produced by the methods disclosed herein has certain hardness, the present invention can provide set type yogurt having favorable hardness.

### Best Mode for Carrying Out the Invention

### 1. Method for Producing Set-type yogurt According to the First Aspect of the Present Invention

The method for producing set-type yogurt according to the first aspect of the present invention relates to a method for producing set-type yogurt using yogurt mix and the yogurt mix contains 0.3 % by weight or more of α-lactalbumin based on the total weight of the yogurt mix. In this method for producing set-type yogurt, we can apply publicly known conditions and processes as appropriate except for the yogurt mix and the conditions of the thermal sterilization.

Examples of the "fermented milk" in this specification include yogurt such as set type yogurt (solid fermented milk), soft yogurt (pasty fermented milk) and drink yogurt (liquid fermented milk). A preferable set type yogurt in the present invention is plain yogurt. Generally, the plain yogurt is produced by filling raw materials in the container to be subsequently fermented (post-fermentation). On the other hand, the soft yogurt and drink yogurt are produced by providing grain refinement and homogenization to fermented milk to be subsequently filled in the container (pre-fermentation). The method of the present invention can be used in both of the above-mentioned producing methods. Preferably, the method of the present invention is directed to a method for producing set-type yogurt by the post-fermentation.

"Yogurt mix" in this specification, which is also called fermented milk mix, is mixture used as the ingredient of fermented milk such as set-type yogurt. The yogurt mix may be unsterilized or sterilized. Specific examples of raw materials of yogurt mix include water, raw milk, sterilized milk, skim milk, dry whole milk, dry skim milk, butter milk, butter, cream, whey protein concentrate (WPC), whey protein isolate (WPI), α-La, WPC rich in α-La (α-La-rich WPC), β-Lg, WPC rich in β-Lg (β-Lg-rich WPC), and the like. On the other hand, "starting milk mixture" in this specification is mixture of raw materials of fermented milk, which excludes from yogurt mix whey protein concentrate (WPC), whey protein isolate (WPI), α-La, WPC rich in α-La (α-La-rich WPC), β-Lg, WPC rich in β-Lg (β-Lg-rich WPC). As the raw materials of the starting milk mixture, publicly known raw materials of starting milk mixture may be used without specific limitation. Examples of specific raw materials of the starting milk mixture include water, raw milk, sterilized milk, skim milk, dry whole milk, dry skim milk, butter milk, butter, cream, and the like.

Fermented milk can be usually obtained as follows: raw materials such as milk, milk products, and milk protein depending on situations are mixed to obtain yogurt mix; the yogurt mix is homogenized and heat-sterilized; thereafter, the yogurt mix is cooled and the starter and the like are added thereto to prepare the yogurt mix; and the yogurt mix is subsequently fermented.

1.1. Yogurt mix preparation process

Yogurt mix preparation process is for obtaining yogurt mix (fermented milk mix) by mixing raw materials of fermented milk. The yogurt mix as the raw materials of the fermented milk may have similar composition with that of publicly known yogurt mix for producing fermented milk except that α-La or WPC rich in α-La (α-La-rich WPC) is added thereto. Specific example of raw materials of the fermented milk include water, raw milk, sterilized milk, skim milk, dry skim milk, butter, cream, α-La and α-La-rich WPC. Either one or both of α-La and α-La-rich WPC may be added. It is to be noted that when producing soft yogurt and drink yogurt, fruit juice, fruity flesh, sweetener, and the like may be added at this stage or at the subsequent stage. α-La or WPC rich in α-La may be added without being heat-sterilized to starting milk mixture prior to sterilization. Also, aroma chemicals and stabilizers may be added as appropriate.

In addition to a producing method that will be described later, α-lactalbumin (α-La) may be obtained, as described in Japanese Patent Application Laid-Open Publication No. 7-203863, by adjusting a whey to assume pH of 4.4 to 4.6, protein concentration of 0.5 to 10%, NaCl concentration of 1.0 M, contacting the whey with the hydrophobic chromatography resin and fractionating with NaCl and 40% (V/V) ethanol. Since α-La is commercially available, α-La may be purchased for use. Pure α-La may be added, while the α-La containing composition containing α-La, the publicly known carrier and the like may be added to the composition of milk raw materials.

When adding the α-La to the starting milk mixture, a preferable amount of the α-La contained in the yogurt mix is 0.3 % or more by weight of the total weight of the yogurt mix. In this case, normal WPC (excluding WPC whose α-La or β-Lg content has been intentionally increased) is added by 0.5 % by weight of the total weight of the yogurt mix or less, preferably by 0.2 % by weight or less, more preferably by 0.1 % by weight or less, and the most preferably without addition of the normal WPC. As demonstrated by Example 4 and the like which will be described later, fermented milk having ideal hardness can be produced by intentionally using yogurt mix rich in α-lactalbumin. It is to be noted that in the present invention, it is preferable to add α-La or α-La containing composition to the starting milk mixture to obtain yogurt mix. As shown in Example 4, the amount of α-La contained in the yogurt mix when adding α-La in the starting milk mixture is preferably 0.3 % by weight or more of the total weight of the yogurt mix, more preferably 0.5 % by weight or more, further preferably 0.9 % by weight or more, and may be 1 % by weight or more. On the other hand, when the amount of α-La is excessive, the hardness of the fermented milk may become too high, so that the amount of the α-La contained in the yogurt mix when adding the α-La to the starting milk mixture is preferably 10 % by weight or less based on the total weight of the yogurt mix, more preferably 5 % by weight or less, and further preferably 2 % by weight or less. It is seen from Example 4 that in the case of adding the α-La to the starting milk mixture, the additive amount α-La is preferably 0.5 % by weight to 0.9 % by weight of the starting milk mixture.

As demonstrated by Example 4, which will be described later, using the yogurt mix whose weight ratio between the α-lactalbumin and the milk solid not fat (α-La/SNF) is 0.035 or more is the preferred embodiment of the present invention. In this embodiment, the α-La/SNF is preferably between 0.035 and 1 inclusive, more preferably between 0.05 and 0.5 inclusive, further preferably between 0.09 and 0.3 inclusive, as well as between 0.1 and 0.2 inclusive. In this case, it is preferable that the amount of α-La in the yogurt mix is within the above-mentioned range.

As demonstrated by Example 4 or the like, which will be described later, using the yogurt mix whose weight ratio between the α-lactalbumin and the β-lactoglobulin (α-La/β-Lg) is between 1 and 10 inclusive, preferably between 1.5 and 4 inclusive, more preferably between 1.5 and 3 inclusive is the preferred embodiment of the present invention. In this case, it is preferable that the amount of α-La in the yogurt mix is within the above-mentioned range.

Example 4 and Example 5, which will be described later, demonstrate using the yogurt mix containing the α-La treated with ultra high temperature processing. In this case, using the yogurt mix in which the α-La is added to the starting milk mixture and using the yogurt mix in which the α-La treated with the ultra high temperature processing is added to the starting milk mixture are both accepted. As for the additive amount of the α-La treated with the ultra high temperature processing, the same amount as that of the above-mentioned α-La may be added as appropriate.

It is to be noted that using the yogurt mix containing whey protein concentrate which contains 60 % by weight or more α-lactalbumin based on the protein (α-La-rich WPC) substituting the α-La or together with the α-La is the preferred embodiment of the present invention. Also in this case, the sufficient amount of the α-La is contained in the yogurt mix, so that the same effect as that described above can be obtained.

When α-La-rich WPC is used as raw material of yogurt mix, α-lactalbumin content of the α-La-rich WPC may be, for example, 60 % by weight or more of the total protein contained in the α-La-rich WPC, preferably 80 % by weight or more, and more preferably 90 % by weight or more. The amount of α-La and the amount of protein contained in the α-La-rich WPC can be adjusted as appropriate by the known methods. The α-La-rich WPC may be added so that the amount of α-La contained in the yogurt mix assumes the above-mentioned % by weight. Therefore, the amount of α-La-rich WPC to be added to the starting milk mixture may change depending on the α-La content in the α-La-rich WPC, while 0.5 % by weight to 2 % by weight of the total weight of the yogurt mix is an example. It is to be noted that in view of flavor and name, protein content contained in the α-La-rich WPC may be 50 % by weight or less or 40 % by weight or less.

In the yogurt mix preparation process, normal conditions employed when producing fermented milk may be adopted as appropriate. Namely, the known apparatus may be used, and the same time as in the normal yogurt mix preparation process may be taken under normal conditions of temperature, humidity, and pressure. It is to be noted that the raw materials may be added with or without stirring, preferably with stirring.

It is to be noted that after the yogurt mix preparation process, homogenization process may be provided as appropriate. The homogenization process is arbitrary process for finely breaking fats contained in the yogurt mix by exposing the yogurt mix under high pressure condition in order to prevent fat contents of the fermented milk from isolation or floatation. For the homogenization, the known apparatus used for method for producing fermented milk, and known conditions of temperature, humidity, barometric pressure, time and the like.

### 1.2. Heat sterilization process

The heat sterilization process is process for heating the yogurt mix from which the fermented milk is made so as to kill viable bacterium or heat-resistant bacterium (sporeformer and the like). In the heat sterilization process, the known sterilizer that is used for producing fermented milk may be used.

In the heat sterilization process, high temperature short time (HTST) processing is normal sterilization condition adopted for producing fermented milk. However, in the present invention ultra high temperature (UHT) processing is applied. As verified specifically by Examples which will be described later, fermented milk with higher hardness can be produced by applying the UHT processing when yogurt mix containing the predetermined amount of the α-La.

It is to be noted that in the present specification, the "high temperature short time (HTST) processing" means process for heating mixture of raw materials from which the fermented milk is made at a temperature of 95 to 100 degree of Celsius, for 15 seconds to 10 minutes, for sterilization. On the other hand in the present specification, "ultra high temperature (UHT) processing" means process for heating mixture of raw materials from which the fermented milk is made at a temperature of 110 degree of Celsius or above for 1 or more seconds. In the present invention, the temperature of the UHT is 120 to 140 degree of Celsius, and more preferably 120 to 130 degree of Celsius. The holding time of the UHT is 1 second to 5 minutes, more preferably 1 second to 2 minutes, and further more preferably 10 seconds to 2 minutes. However, the sufficient sterilizing effect can be obtained even with short holding time of 1.5 seconds to 3 seconds.

As shown in Example 4 which will be described later, the hardness of the fermented milk obtained by the UHT is decreased when the α-La content in the yogurt mix is less, while the hardness of the fermented milk obtained by the UHT is increased when the α-La content is the predetermined amount. Therefore, providing UHT when the α-La content in the yogurt mix is 0.6 % by weight or more is the preferred embodiment of the present invention. Specifically, obtaining set-type yogurt from yogurt mix with the α-La content of 0.7 % by weight to 0.9 % by weight by providing UHT is preferable since set-type yogurt with appropriate hardness can be obtained while contents other than raw milk are relatively decreased. On the other hand, providing HTST when the α-La content in the yogurt mix is 0.7 % by weight or less (or 0.6 % by weight or less) is also disclosed.

### 1.3. Cooling process

The cooling process is for cooling the yogurt mix having been heated by the heat sterilization process to a temperature near the fermentation temperature. As a cooling method, a known method used in the cooling process of the fermented milk may be adopted. For example, the heated yogurt may be cooled with a heat exchanger.

### 1.4. Inoculation and mixing process

The inoculation and mixing process is for inoculating the yogurt mix with the starter and mixing as appropriate so as to obtain mixture before fermentation.

Starters to be inoculated to the mix include lactic acid bacterial starters. One or at least two species of lactic acid bacterial starters may be selected from *Lactobacillus bulgaricus (L.bulgaricus), Streptococcus thermophilus (S.thermophilus), Lactobacillus lactis (L.lactis), Lactobacillus gasseri (L.gasseri),* and *Bifidobacterium*, as well as lactic acid bacteria and yeasts generally used for producing fermented milk. Among these, the preferred starter is based on the mixed starter of *Lactobacillus bulgaricus (L.bulgaricus)* and *Streptococcus thermophilus (S*.*thermophilus)* that is standardized by the codex alimentarius. Based on this yogurt starter, other lactic acid bacteria such as *Lactobacillus gasseri (L.gasseri), Bifidobacterium*, and the like may be added in accordance with desired fermented milk. The additive amount of the starter may be appropriately selected from the amount adopted by a known method for producing fermented milk. The inoculation method of the starter may follow the known method used for producing fermented milk.

### 1.5. Fermentation process

The fermentation process is for fermenting mixture of the yogurt mix and the starter. For example, in the case of the post-fermentation, the container is filled with the mixture of the yogurt mix and the starter. Then the container is put in the fermentation room. The fermentation room is set to the predetermined temperature and the container is maintained for the predetermined time in order to ferment the yogurt mix. Thus the fermented milk can be obtained.

Fermentation conditions such as fermentation temperature may be adjusted as appropriate considering the kinds of lactic acid bacteria added to the yogurt mix, desired flavor of the fermented milk, and the like. As a specific example, the temperature in the fermentation room (fermentation temperature) may be maintained at 40 to 45 degree of Celsius. At this temperature, the lactic acid bacteria are generally active, so that the fermentation can be developed effectively. On the other hand, if it is desired to add the product the smoother flavor than that of the normal product, the fermentation temperature may be at 30 to 40 degree of Celsius, preferably at 32 to 39 degree of Celsius, more preferably at 36 to 39 degree of Celsius.

The fermentation time may be adjusted as appropriate in accordance with the starter, the fermentation temperature, and the like. Specifically, the fermentation time may be 1 hour to 5 hours, or about 3 hours.

### 1.6. Set-type yogurt

The set-type yogurt produced by the method according to the first aspect of the present invention is the excellent set-type yogurt having favorable hardness and without losing flavor since contents other than raw milk are relatively little. Also, since UHT iis used while the set-type yogurt has high hardness, the situation where proliferation of not only viable bacteria but also heat-resistant bacteria (sporeformers and the like) can be effectively avoided, so that the set-type yogurt does not lose flavor and has high quality. The set-type yogurt produced by the method according to the first aspect of the present invention is specifically produced by the above-mentioned method for producing, and contains 0.3 % by weight or more of α-lactalbumin. Considering that the composition may change and the α-La may be decomposed during producing stages, the set-type yogurt may contain 0.1 % by weight or more α-La.

In order to avoid the product from crumbling during the course of distribution, the hardness of the set type yogurt is preferably 30 g or more. However, if the hardness is too high, the texture deteriorates. Therefore, the hardness of the set type yogurt is 40 g to 80 g, and preferably 50 g to 60 g. According to the method for producing according to the present invention, as demonstrated by the Examples, which will be described later, the set type yogurt satisfying the hardness condition can be obtained. The set type yogurt produced by the method of the present invention has hardness of a certain level. Therefore, set type yogurt having favorable hardness can be obtained by the present invention.

The hardness (yogurt curd tension, CT) was measured according to the measurement manual of the Neo Curd Meter ME305 (I. Techno Engineering). Specifically, the "hardness" of the fermented milk in the method of the present invention is determined by using a load cell to measure the distortion caused by the deformation upon applying constant rate of load (100g) through spring to a sample cooled to the temperature of 5 to 10 degree of Celsius to determine rupture or hardness. Unit of the "hardness" is gram (g).

### 2. Method for producing fermented milk

A method for producing fermented milk disclosed herein will now be described. This method for producing can adopt the same processes as those of the method according to the first aspect of the present invention described above except for the yogurt mix preparation process and the heat sterilization process. Therefore, in order to avoid repetition, the description for the same processes are to be applied correspondingly, while the yogurt mix preparation process, the heat sterilization process, and the obtained fermented milk will be described hereinafter.

### 2.1. Yogurt mix preparation process

A yogurt mix preparation process is for obtaining a yogurt mix (fermented milk mix) by mixing raw materials of fermented milk. The yogurt mix as the raw materials of the fermented milk may have similar composition with that of a publicly known yogurt mix for producing fermented milk except that β-Lg or WPC rich in β-Lg (β-Lg-rich WPC) is added thereto. Specific example of raw materials of the fermented milk include water, raw milk, sterilized milk, nonfat milk, nonfat dry milk, butter, cream, β-Lg and β-Lg-rich WPC. Either one or both of β-Lg and β-Lg-rich WPC may be added. It is to be noted that when producing soft yogurt and drink yogurt, fruit juice, fruity flesh, sweetener, and the like may be added at this stage or at the subsequent stage. β-Lg or WPC rich in β-Lg may be added without being heat-sterilized to starting milk mixture prior to sterilization. Also, aroma chemicals and stabilizers may be added as appropriate.

It is to be noted that as demonstrated by Example 6, which will be described later, the β-Lg or the β-Lg-rich WPC may be added as appropriate besides the β-Lg or the β-Lg-rich WPC to the yogurt mix or the starting milk mixture. The additive amount in such a case may be the same amount with that described in the method according to the first aspect of the present invention or 1/3 to 1/2 of such an amount.

In addition to a producing method that will be described later, β-lactoglobulin (β-Lg) may be obtained, as described in Japanese Patent Application Laid-Open Publication No. 7-203863, by adjusting whey to assume pH of 4.4 to 4.6, protein concentration of 0.5 to 10%, NaCl concentration of 1.0 M, contacting the whey with the hydrophobic chromatography resin and fractionating with NaCl and 40% (V/V) ethanol. Aksi, since β-Lg is commercially available, β-Lg may be purchased for use. Pure β-Lg may be added, while the β-Lg containing composition containing β-Lg, the publicly known carrier and the like may be added to the composition of milk raw materials.

When adding the β-Lg to the starting milk mixture, the amount of the β-Lg contained in the yogurt mix is preferably 0.4 % by weight or more of the total weight of the yogurt mix. In this case, normal WPC is added by 0.5 % by weight of the total weight of the yogurt mix or less, preferably by 0.2 % by weight or less, more preferably by 0.1 % by weight or less, and the most preferably without addition of the normal WPC. As demonstrated by Example 4 which will be described later, even if the total amount of β-Lg contained in the yogurt mix is large, the hardness is low for the yogurt mix where the normal WPC75 is used compared to the yogurt mix with addition of 2 % by weight of β-Lg. Therefore, reducing the additive amount of the normal WPC and adding the β-Lg is preferred. As demonstrated
by Example 4 and Example 7 which will be described later, fermented milk having ideal hardness can be produced by using yogurt mix containing the predetermined amount of β-lactoglobulin. It is to be noted that it is preferable to add β-Lg or β-Lg containing composition to the starting milk mixture to obtain yogurt mix. It is seen from Example 4 that the amount of β-Lg contained in the yogurt mix when adding β-Lg in the starting milk mixture is preferably 0.3 % by weight or more of the total weight of the yogurt mix, more preferably 0.5 % by weight or more, further preferably 0.9 % by weight or more, and may be 1 % by weight or more. On the other hand, when the amount of β-Lg is excessive, the hardness of the fermented milk may become too high, so that the amount of the β-Lg contained in the yogurt mix when adding the β-Lg to the starting milk mixture is preferably 10 % by weight or less based on the total weight of the yogurt mix, more preferably 5 % by weight or less, and further preferably 2 % by weight or less. It is seen from Example 4 that in the case of adding the β-Lg to the: starting milk mixture, the additive amount β-Lg is preferably 0.5 % by weight to 0.9 % by weight of the starting milk mixture.

As demonstrated by Example 4, which will be described later, using the yogurt mix whose weight ratio between the β-lactoglobulin and the milk solid non fat (β-Lg/SNF) is 0.05 or more is preferred. The β-Lg/SNF is preferably between 0.05 and 1 inclusive, more preferably between 0.07 and 0.5 inclusive, further preferably between 0.1 and 0.3 inclusive, as well as between 0.1 and 0.2 inclusive. In this case, it is preferable that the amount of β-Lg in the yogurt mix is within the above-mentioned range.

It is to be noted that using the yogurt mix containing the β-Lg treated with ultra high temperature processing is preferred. In this case, using the yogurt mix in which the β-Lg is added to the starting milk mixture and using the yogurt mix in which the β-Lg treated with the ultra high temperature processing is added to the starting milk mixture are both accepted. As for the additive
amount of the β-Lg treated with the ultra high temperature processing, the same amount as that of the above-mentioned β-Lg may be added as appropriate.

It is to be noted that using the yogurt mix containing whey protein concentrate which contains 65 % by weight or more β-lactoglobulin based on the protein (β-Lg-rich WPC) substituting the β-Lg or together with the β-Lg is preferred. Also in this case, the sufficient amount of the β-Lg is contained in the yogurt mix, so that the same effect as that described above can be obtained. Also as demonstrated by Example 1, the usage of WPC can be reduced compared to the case where the normal WPC is used by using the β-Lg-rich WPC.

When β-Lg-rich WPC is used as raw material of yogurt mix, β-lactoglobulin content of the β-Lg-rich WPC may be, for example, 65 % by weight or more of the total protein contained in the β-Lg-rich WPC, preferably 80 % by weight or more, and more preferably 90 % by weight or more. The amount of β-Lg and the amount of protein contained in the β-Lg-rich WPC can be adjusted as appropriate by the known method. The β-Lg-rich WPC may be added so that the amount of β-Lg contained in the yogurt mix assumes the above-mentioned % by weight. Therefore, the amount of β-Lg-rich WPC to be added to the starting milk mixture may change depending on the β-Lg content in the β-Lg-rich WPC. In the case where the β-lactoglobulin content of the β-Lg-rich WPC is 50 % by weight or more of the total protein contained in the β-Lg-rich WPC, the amount of the β-Lg-rich WPC to be added to the yogurt mix may be, for example, 0.3 % by weight to 2 % by weight of the total weight of the yogurt mix, 0.4 % by weight to 1 % by weight, or 0.4 % by weight to 0.55 % by weight. Within such a range, the fermented milk with the preferred hardness can be produced as demonstrated by Example 1 which will be described later. On the other hand, in the case where the β-lactoglobulin content of the β-Lg-rich WPC is 50 % by weight or less of the total protein contained in the β-Lg-rich WPC, the amount of the β-Lg-rich WPC to be added to the starting milk mixture may be, for example, the yogurt mix may be, for example, 0.5 % by weight to 4 % by weight of the total weight of the yogurt mix, 0.75 % by weight to 1.5 % by weight, or 1 % by weight to 1.4 % by weight. Within such a range, the fermented milk with the preferred hardness can be produced as demonstrated by Example 1 which will be described later. It is to be noted that in view of flavor, name and the like, protein content contained in the β-Lg-rich WPC may be 75 % by weight or less or 40 % by weight or less.

In the yogurt mix preparation process, normal conditions employed when producing fermented milk may be adopted as appropriate. Namely, the known apparatus may be used, and the same time as in the normal yogurt mix preparation process may be taken under normal conditions of temperature, humidity, and pressure. It is to be noted that the raw materials may be added with or without stirring, preferably with stirring.

### 2.2. Heat sterilization process

The heat sterilization process is process for heating the yogurt mix from which the fermented milk is made so as to kill viable bacterium or heat-resistant bacterium (sporeformer and the like). In the heat sterilization process, the known sterilizer that is used for producing fermented milk may be used. As demonstrated by Example 4 and Example 7 which will be described later, in the case of producing the fermented milk with yogurt mix obtained by adding the β-Lg to the milk raw materials, it is preferable to conduct heat sterilization by the UHT when the β-Lg contained in the yogurt mix is, for example, 0.6 % by weight or more (preferably between 0.6 % by weight and 0.9 % by weight inclusive, more preferably between 0.65 % by weight and 0.8 % by weight inclusive, or between 0.7 % by weight and 0.75 % by weight inclusive). On the other hand, it is preferable to conduct heat sterilization by the HTST when the β-Lg contained in the yogurt mix is, for example, 0.35 % by weight or more (preferably between 0.4 % by weight and 0.6 % by weight inclusive, more preferably between 0.4 % by weight and 0.6 % by weight inclusive, or between 0.45 % by weight and 0.5 % by weight inclusive).

### 2.3. Fermented milk

The fermented milk produced by the above mentioned method is an excellent fermented milk having a favorable hardness and without losing flavor since contents other than raw milk are relatively little. The fermented milk produced by the above-mentioned method contains 0.4 % by weight or more β-lactoglobulin. Considering that the composition may change and the β-Lg may be decomposed during producing stages, the fermented milk may contain 0.1 % by weight or more β-Lg.

### 3.1. Method for producing α-La and β-Lg

Composition containing α-La or β-Lg can be produced as follows: Firstly, whey is introduced into reaction tank including ion exchanger, followed by addition of acid or alkali to adjust the acidity (pH) to the level where the α-La or the β-Lg specifically absorbs. Thereafter, the α-La or the β-Lg is absorbed to the ion exchanger while the liquid is stirred. The whey is discharged by filtration through the filter, and the ion exchanger remaining in the reaction tank is washed. The reaction tank is filled with water and the acidity is adjusted. Thus, the α-La or the β-Lg absorbed to the ion exchanger is desorbed. The liquid in which the α-La or the β-Lg is dissolved is filtered through a filter, concentrated, and then dried. Thus, the composition containing the α-La or the β-Lg can be obtained.

### 3.2. Method for producing α-La-rich WPC and β-Lg-rich WPC

Ultrafiltration (UF) is applied to the whey so as to adjust the protein content to about 34 % by weight of the solid content. It is to be noted that the powder obtained by drying the whey in this state is typical WPC34. The WPC34 liquid is desalted with the ion-exchange resin. After adjusting the acidity by adding acid or alkali so that the isoelectric point of the α-La or the β-Lg is reached, the liquid is maintained for 2 to 3 hours at 50 to 55 degree of Celsius, whereby the α-La or the β-Lg is precipitated. For example, the α-La precipitates when the pH is adjusted to about 4.2. Thereafter, the α-La contained in the precipitate and the β-Lg contained in the supernatant are separated by centrifugation. β-Lg-rich WPC34 can be obtained by drying the β-Lg contained in the supernatant as is or by applying ultrafiltration so as to adjust the protein content to about 34 % by weight of the solid content. On the other hand, α-La-rich WPC34 can be obtained by drying the precipitate or by adjusting the protein content to about 34 % by weight of the solid content of the precipitate. It is to be noted that by adjusting the protein content in the solid content, α-La-rich WPC75 or β-Lg-rich WPC75 and the like can be produced.

### [Reference Example 1: Effects of β-Lg-rich WPC on yogurt property]

Effects of β-Lg-rich WPC on yogurt property were examined. First, yogurt mix was prepared by mixing 77.5 kg of UHT-sterilized milk and 2.9 kg of dry skim milk with β-Lg-rich WPC (β-Lg-rich WPC75 or β-Lg-rich WPC34) produced by Friesland Food Domo Inc. (Domo) and 17.6 kg of water. It is to be noted that in the β-Lg-rich WPC75, % by weight of the protein content is 75 % by weight. On the other hand, in the β-Lg-rich WPC34, % by weight of the protein content is 34 % by weight. The β-Lg-rich WPC75 and the β-Lg-rich WPC34 can be produced by adjusting the protein content to 75 % by weight and 34 % by weight, respectively of the solid content.

It is to be noted that amounts of milk, dry skim milk and water were adjusted, so that the milk solid not fat (SNF) is about 9.5 % by weight of the total and the fat content is about 3 % by weight.

This yogurt mix was provided with the HTST (at 95 degree of Celsius for 2 minutes). Thereafter, the yogurt mix was cooled to 45 degree of Celsius, and 2 % by weight of lactic acid bacteria starter (mixed culture of Lactobacillus bulgaricus (L.bulgaricus JCM 1002T) and Streptococcus thermophilus (S.thermophilus ATCC 19258)) was inoculated. This liquid was filled in the container and fermented in the fermentation room at 45 degree of Celsius. The container was taken out from the fermentation room when the lactic acid acidity reaches 0.7 %. The fermented milk taken out was cooled to 10 degree of Celsius to yield the final product. The fermentation time was about 3 hours. It is to be noted that the lactic acid acidity was calculated by the titration with 0.1 normal sodium hydroxide using phenolphthalein as and indicator. Curd tension of the obtained fermented milk was measured. The results thereof are shown in the following Table 1. It is to be noted that the additive amount (% by weight) in Table 1 denotes % by weight occupied by the added β-Lg-rich WPC75 or β-Lg-rich WPC34 in the entire yogurt mix.

**Table 1: Curd tension of fermented milk obtained by using β-Lg-rich WPC75**

| WPC used | Additive amount (% by weight) | CT (g) | β-Lg (%) | α-La (%) | Protein (%) | Casein (%) |
|---|---|---|---|---|---|---|
| β-Lg-rich WPC75 | 0.90 | 87.8 | 0.89 | 0.06 | 3.90 | 2.53 |
| β-Lg-rich WPC75 | 0.60 | 78.6 | 0.71 | 0.06 | 3.78 | 2.61 |
| β-Lg-rich WPC75 | 0.50 | 54.7 | 0.65 | 0.06 | 3.74 | 2.64 |
| β-Lg-rich WPC75 | 0.40 | 49.4 | 0.59 | 0.06 | 3.70 | 2.66 |
| β-Lg-rich WPC75 | 0.30 | 33.9 | 0.53 | 0.06 | 3.66 | 2.69 |
| β-Lg-rich WPC34 | 1.45 | 63.4 | 0.69 | 0.06 | 3.53 | 2.38 |
| β-Lg-rich WPC34 | 1.25 | 49.4 | 0.65 | 0.06 | 3.53 | 2.43 |
| β-Lg-rich WPC34 | 1.00 | 47.1 | 0.59 | 0.06 | 3.53 | 2.50 |
| β-Lg-rich WPC34 | 0.75 | 44.3 | 0.52 | 0.06 | 3.45 | 2.50 |
| β-Lg-rich WPC34 | 0.50 | 41.1 | 0.45 | 0.06 | 3.36 | 2.50 |

### [Comparative Example]

As the comparative example, fermented milk was produced and the curd tension (hardness) was measured in the same way as in Reference Example 1 except that the β-Lg-rich WPC75 and the β-Lg-rich WPC34 were substituted with the WPC75 and the WPC34 normally used when producing fermented milk. The results are shown in the following Table 2. It is to be noted that the normal WPC75 and WPC34 used in this comparative example were purchased from Calpro Ingredients, Inc. (Calpro). It is to be noted that the additive amount (% by weight) in Table 2 denotes % by weight occupied by the added WPC75 or WPC34 in the entire yogurt mix.

**Table 2:**

| Curd tension of fermented milk obtained by using normal WPC75 | | | | | | |
|---|---|---|---|---|---|---|
| WPC used | Additive amount (% by weight) | CT (g) | β-Lg (%) | α-La (%) | Protein (%) | Casein (%) |
| Normal WPC75 (Calpro) | 0.90 | 33.0 | 0.62 | 0.16 | 3.92 | 2.54 |
| Normal WPC34 (DOMO) | 1.65 | 31.4 | 0.61 | 0.15 | 3.55 | 2.34 |
| Normal WPC34 (DOMO) | 1.45 | 22.4 | 0.58 | 0.14 | 3.55 | 2.39 |
| None | 0.00 | 24.0 | 0.35 | 0.07 | 3.53 | 2.77 |

It is seen from Table 1 and Table 2 that by using the β-Lg-rich WPC, fermented milk with equivalent hardness compared to the case where the normal WPC is used can be produced by adding only 1/3 or less amount of WPC.

### [Reference Example 2: Effects of β-Lg and α-La on yogurt property]

Effects of β-Lg and α-La on yogurt property were examined. Namely, fermented milk was produced and the curd tension (hardness) was measured in the same way as in Reference Example 1 except that the β-Lg-rich WPC75 and the β-Lg-rich WPC34 in Reference Example 1 were substituted with β-Lg and α-La manufactured by Davisco Inc. (DAVISCO) respectively, added in the amount of 0.9 % by weight. The results are shown in the following Table 3. Additionally, the resulting curd tension of the fermented milk produced by using the normal WPC (manufactured by Calpro, WPC75) is also shown in Table 3 for comparison. It is to be noted that both of the β-Lg and α-La have the protein content of 95 % by weight, wherein 90 % by weight is occupied by the β-Lg or the α-La. Also, the additive amount (% by weight) in Table 3 denotes % by weight occupied by the added β-Lg or α-La in the entire yogurt mix.

**Table 3: Curd tension of fermented milk obtained by using β-Lg and α-La**

| WPC used | Additive amount (% by weight) | CT (g) | β-Lg (%) | α-La (%) | Protein (%) | Casein (%) |
|---|---|---|---|---|---|---|
| β-Lg | 0.90 | 100 or more | 1.03 | 0.06 | 4.03 | 2.53 |
| α-La | 0.90 | 35.8 | 0.32 | 0.77 | 4.03 | 2.53 |
| Normal WPC75 (Calpro) | 0.90 | 33.0 | 0.62 | 0.16 | 3.92 | 2.54 |

It is seen from Table 3 that, while the hardness of the fermented milk produced by adding the α-La was only slightly increased, the hardness of the fermented milk produced by adding the β-Lg was significantly increased.

### [Example3]

### [Example 3: Sterilization conditions upon using α-La containing yogurt mix]

In Example 3, effects of sterilization conditions on fermented milk upon using α-La containing yogurt mix. Fermented milk was produced and the curd tension (hardness) was measured in the same way as in Reference Example 1 except that the β-Lg-rich WPC75 and the β-Lg-rich WPC34 in Reference Example 1 were substituted with α-La manufactured by Davisco Inc. added in the amount of 0.9 % by weight and that the high temperature short time processing at 95 degree of Celsius was substituted with the ultra high temperature processing (at 120 degree of Celsius for 2 minutes) carried out with the autoclave. It is to be noted that the fermented milk was produced by using the normal WPC75 (manufactured by Calpro) and by carrying out the ultra high temperature processing, and the curd tension was measured for comparison. The results are shown in the following Table 4.

**Table 4:**

| Curd tension of fermented milk obtained by ultra-high-temperature sterilization | | | | | | | |
|---|---|---|---|---|---|---|---|
| WPC used | | Additive amount (% by weight) | CT (g) | β-Lg (%) | α-La (%) | Protein (%) | Casein (%) |
| β-Lg | | 0.90 | 100 or more | 1.03 | 0.06 | 4.03 | 2.53 |
| α-La | | 0.90 | 64.0 | 0.32 | 0.77 | 4.03 | 2.53 |
| Normal (Calpro) | WPC75 | 0.90 | 22.0 | 0.62 | 0.16 | 3.92 | 2.54 |

By comparing Table 3 and Table 4, it is seen that the hardness of the yogurt mix containing the α-La was significantly increased by the ultra high temperature processing. Therefore, it is seen that the fermented milk with high hardness can be effectively produced with the use of the α-La and that sufficient curd tension can be obtained even if components other than raw milk are reduced. Also, it is seen that although the curd tension is decreased by the ultra high temperature processing when using the normal WPC, the curd tension can be increased by using the α-La as a raw material.

### [Example 4]

### [Example 4: Effects of α-La or β-Lg content and sterilization conditions on fermented milk]

In Example 4, effects of α-La or β-Lg content and sterilization conditions on fermented milk were examined. Also examined was the amount of α-La to be contained in the yogurt mix in order that the hardness is increased by the UHT. Fermented milk was produced and the curd tension (hardness) was measured in the same way as in Reference Example 1 except that the β-Lg-rich WPC75 and the β-Lg-rich WPC34 in Reference Example 1 were substituted with α-La or β-Lg manufactured by Davisco Inc. added in the predetermined amount and that in addition to the cases with high temperature short time processing at 95 degree of Celsius and with ultra high temperature processing (at 120 degree of Celsius for 2 minutes) were carried out with the autoclave. It is to be noted that fermented milk with the use of the normal WPC75 (manufactured by Calpro) and fermented milk without adding whey raw materials such as the WPC, the α-La and the β-Lg were produced and their curd tensions were measured. The results are shown in the following Table 5. It is to be noted that the additive amount (% by weight) in Table 5 denotes % by weight occupied by the added β-Lg, α-La or WPC75 in the entire yogurt mix. It is to be noted that the β-Lg (%) in Table 5 denotes % by weight occupied by the β-Lg in the yogurt mix, while the α-La (%) denotes % by weight occupied by the α-La in the yogurt mix. The CT (g) at 95 degree of Celsius in Table 5 denotes the curd tension obtained by the high temperature short time processing, while the CT (g) at 120 degree of Celsius denotes the curd tension obtained by the ultra high temperature processing.

**Table 5: Fermented milk produced by adjusting α-La or β-Lg content and sterilization conditions**

| Whey used | Additive amount (%) | β-Lg (%) | α-La (%) | CT (g) at 95°C C | CT(g) at 120°C |
|---|---|---|---|---|---|
| β-Lg | 0.90 | 1.10 | 0.14 | 100 or more | 100 or more |
| β-Lg | 0.50 | 0.77 | 0.14 | 100 or more | 60.0 |
| β-Lg | 0.20 | 0.52 | 0.14 | 60.0 | 23.0 |
| α-La | 0.90 | 0.32 | 0.91 | 59.0 | 65.0 |
| α-La | 0.50 | 0.33 | 0.57 | 40.0 | 30.0 |
| α-La | 0.20 | 0.34 | 0.34 | 34.0 | - |
| WPC75 | 0.90 | 0.66 | 0.25 | 40.0 | 22.0 |
| None | 0.00 | 0.35 | 0.14 | 34.0 | 18.0 |

It is seen from Table 5 that fermented milk with ideal hardness can be produced by using yogurt mix (fermented milk mix) rich in α-lactalbumin. Also, it is seen that when the yogurt mix rich in α-lactalbumin is used, the hardness of the obtained fermented milk is more increased by providing the ultra high temperature processing. It is seen that by using yogurt mix rich in β-Lg, fermented milk with sufficient hardness can be produced.

### [Example 5]

### [Example 5: Effects of sterilization conditions of α-La contained in yogurt mix on fermented milk]

In Example 5, effects of sterilization conditions of α-La contained in yogurt mix on fermented milk were examined. In this example, 2 kinds of solution containing 17 % by weight of the α-La (solid content concentration of aqueous solution: 20 % by weight) are prepared. One is provided with the high temperature short time processing (at 95 °C for 2 minutes), while the other is provided with the ultra high temperature processing (at 120 degree of Celsius for 2 minutes). Then, fermented milk was produced and the curd tension (hardness) was measured in the same way as in Reference Example 1 except that the β-Lg-rich WPC75 and the β-Lg-rich WPC34 in Reference Example 1 were substituted with the α-La solutions prepared as mentioned above to be added in the predetermined amount to the sterilized yogurt mix and the fermentation was carried out thereafter. For comparison, the high temperature short time method (at 95 degree of Celsius for 2 minutes) was carried out after adding the α-La, and then the fermentation was carried out in the same way as in Reference Example 1. The β-Lg (%) in Table 6 denotes % by weight occupied by the β-Lg in the yogurt mix, while the α-La (%) denotes % by weight occupied by the α-La in the yogurt mix.

**Table 6: Effects of sterilization conditions of α-La contained in the yogurt mix on fermented milk**

| Processing conditions | β-Lg(%) | α-La (%) | CT (g) |
|---|---|---|---|
| Processing at 95 C, α-La addition | 0.32 | 0.69 | 43 |
| Processsin at 120 C, α-La addition | 0.32 | 0.69 | 55 |
| α-La addition followed by processing at 95 C | 0.32 | 0.69 | 40 |

It is seen from Table 6 that by adding the α-La treated with the ultra high temperature processing in the yogurt mix, fermented milk with a high hardness can be obtained without treating the yogurt mix itself with the ultra high temperature processing.

### [Example 6]

### [Example 6: Examination of α-La or β-Lg additive amount and physical properties of fermented milk]

In order to examine additive amount of α-La or β-Lg and physical properties of the fermented milk, fermented milk was produced in the same way as in Reference Example 1 except that the β-Lg-rich WPC75 and the β-Lg-rich WPC34 in Reference Example 1 were substituted with addition of α-La, β-Lg or mixture of α-La and β-Lg. The hardness, mean particle diameter (µm), degree of syneresis (%) and degree of acid (%), and the acidity (pH) of the fermented milk were measured. Also, as the control, fermented milk without addition of whey materials was produced and its physical properties were measured. The results are shown in Table 7. It is to be noted that the β-Lg (%) in Table 7 denotes % by weight occupied by the β-Lg in the yogurt mix, while the α-La (%) denotes % by weight occupied by the α-La in the yogurt mix.

**Table 7 Examination of α-La or β-Lg additive amount and physical properties of fermented milk**

| | β-Lg (%) | α-La (%) | CT (g) | mean particle diameter | degree of syneresis | degree of acid | acidity |
|---|---|---|---|---|---|---|---|
| β-Lg | 1.10 | 0.06 | 100 or more | 96.0 | 24.6 | ND* | 4.67 |
| α-La | 0.32 | 0.83 | 36 | 15.5 | 5.1 | 0.85 | 4.61 |
| Mixture | 0.71 | 0.45 | 100 or more | 45.8 | 10.4 | 0.84 | 4.62 |
| Control | 0.62 | 0.16 | 34 | 16.8 | 5.1 | 0.91 | 4.57 |

While all of the fermented milk with the addition of the β-Lg had curd tensions beyond the measurement range of the curd meter, fermented milk with higher hardness could be obtained by the yogurt mix with addition of only the β-Lg compared to that with addition of the α-La besides the β-Lg. Also, it is seen that the β-Lg has higher function to harden the fermented milk as compared to the α-La. On the other hand, it is seen that the addition of the α-La can improve the hardness of the fermented milk obtained. Moreover, it is seen that fermented milk with high hardness can be obtained by using the yogurt mix containing the mixture of the α-La and the β-Lg. It is to be noted that "ND" in Table 7 denotes that the proper measurement was not available.

### [Reference Example 7 Examination of β-Lg additive amount and physical properties of fermented milk]

In order to examine additive amount of β-Lg and physical properties of the fermented milk, fermented milk was produced in the same way as in Reference Example 1 except that the β-Lg-rich WPC75 and the β-Lg-rich WPC34 in Reference Example 1 were substituted with addition of β-Lg. The hardness, mean particle diameter (µm), degree of syneresis (%), and the acidity (pH) of the fermented milk were evaluated. Also, as the control, fermented milk without addition of whey materials was produced and its physical properties as well as flavor and curd tension were evaluated. The results are shown in Table 8. It is to be noted that the additive amount (% by weight) in Table 8 denotes % by weight occupied by the β-Lg in the entire yogurt mix. The β-Lg (%) in Table 8 denotes % by weight occupied by the β-Lg in the yogurt mix, while the α-La (%) denotes % by weight occupied by the α-La in the yogurt mix.

**Table 8: Examination of β-Lg additive amount and physical properties of fermented milk**

| Additive amount | β-Lg (%) | α-La (%) | CT (g) | mean particle diameter | degree of syneresis | Acidity | Flavor | Curd tension |
|---|---|---|---|---|---|---|---|---|
| 0.9 | 1.10 | 0.06 | 100 or more | 135.4 | 26.9 | 4.28 | × | ⊚ |
| 0.5 | 0.77 | 0.06 | 100 or more | 45.8 | 10.2 | 4.24 | × | ⊚ |
| 0.2 | 0.52 | 0.06 | 52 | 27.7 | 5.1 | 4.26 | ⊚ | ⊚ |
| 0.0 | 0.35 | 0.06 | 24 | 27.9 | 26.9 | 4.31 | ⊚ | × |

For the flavor evaluation in Table 8, a double circle (⊚) denotes that the flavor of the fermented milk is excellent, while a cross (×) denotes that the flavor of the fermented milk is not so excellent. Also, for the curd tension evaluation, a double circle (⊚) denotes that the fermented milk with sufficient hardness could be obtained, while a cross (×) denotes that the fermented milk with sufficient hardness could not be obtained. It is seen from Table 8 that when the β-Lg-rich WPC34 was added to the starting milk mixture, with the additive amount of 1.25 % by weight the curd tension was about 50 g. This case corresponds to the addition of 0.56 % by weight of the β-Lg. On the other hand, when the β-Lg was added to the starting milk mixture hardness of about 50 g could be obtained by the addition of only about 0.2 % by weight.

### [Example 8]

### [Example 8: Examination of α-La additive amount and physical properties of fermented milk]

In order to examine additive amount of α-La and physical properties of the fermented milk, fermented milk was produced in the same way as in Reference Example 1 except that the β-Lg-rich WPC75 and the β-Lg-rich WPC34 in Reference Example 1 were substituted with addition of α-La. The hardness, mean particle diameter (µm), degree of syneresis (%), and the acidity (pH) of the fermented milk were measured. Also, as the control, fermented milk without addition of whey materials was produced and its physical properties as well as flavor and curd tension were evaluated. The results are shown in Table 9. It is to be noted that the additive amount (% by weight) in Table 9 denotes % by weight occupied by the α-La in the entire yogurt mix. It is to be noted that the β-Lg (%) in Table 8 denotes % by weight occupied by the β-Lg in the yogurt mix, while the α-La (%) denotes % by weight occupied by the α-La in the yogurt mix.

**Table 9: Examination of α-La additive amount and physical' properties of fermented milk**

| Additive amount | β-Lg (%) | α-La (%) | CT (g) | mean particle diameter | degree of syneresis | Acidity |
|---|---|---|---|---|---|---|
| 0.9 | 0.32 | 0.83 | 59 | 24.0 | 6.2 | 4.34 |
| 0.5 | 0.33 | 0.49 | 40 | 21.2 | 8.6 | 4.37 |
| 0.2 | 0.34 | 0.24 | 34 | 21.7 | 20.2 | 4.36 |
| 0.0 | 0.35 | 0.06 | 34 | 26.3 | 26.8 | 4.39 |

Table 9 shows that as the additive amount of the α-La is increased the hardness of the obtained fermented milk is also increased. Thus it is indicated that the α-La also has the function to increase the hardness of the fermented milk.

## Claims

1. A method for producing set type yogurt, the method comprising the steps of:
sterilizing yogurt mix in an ultra high temperature sterilization process, the yogurt mix containing 0.3 % by weight or more of α-lactalbumin based on total weight of the yogurt mix;
cooling the sterilized yogurt mix; and
fermenting the cooled yogurt mix,
**characterized in that** the ultra high temperature sterilization process is a process for heating the yogurt mix at a temperature of 120 to 140 degrees Celsius for 1 second to 5 minutes.

2. The method for producing set type yogurt according to claim 1,
wherein α-lactalbumin is added to starting milk mixture so that the yogurt mix comprises 0.3 % by weight or more α-lactalbumin based on total weight of the yogurt mix.

3. The method for producing set type yogurt according to claim 1 or claim 2,
wherein the yogurt mix further comprises milk solid not fat, the weight ratio between the α-lactalbumin and the milk solid not fat (α-La/SNF) being 0.035 or more.

4. The method for producing set type yogurt according to any preceding claim, wherein the yogurt mix further comprises whey protein concentrate which comprises 60 % by weight or more of α-lactalbumin based on total protein.

5. The method for producing set type yogurt according to any preceding claim, wherein the ultra high temperature sterilization process is a process for heating the yogurt mix at a temperature of 120 to 140 degrees Celsius for 1.5 seconds to 3 seconds.

6. Set type yogurt produced from a yogurt mix by the method for producing set type yogurt according to claim 1 or claim 5, wherein the yogurt mix comprises 0.3 % by weight or more of α-lactalbumin and either (i) comprises milk solid not fat, the weight ratio between the α-lactalbumin and the milk solid not fat (α-La/SNF) being 0.035 or more, or (ii) has a weight ratio between α-lactalbumin and β-lactoglobulin that is between 1.5 and 4 inclusive, or (iii) comprises the features defined in (i) and (ii).

7. The set type yogurt according to claim 6, wherein the yogurt mix further comprises whey protein concentrate which comprises 60 % by weight or more of α-lactalbumin based on total protein

## Patentansprüche

1. Verfahren zur Herstellung von unterlegtem Joghurt, wobei das Verfahren die folgenden Schritte umfasst:
das Sterilisieren eines Joghurtgemischs in einem Ultrahochtemperatur-Sterilisationsprozess, wobei das Joghurtgemisch basierend auf dessen Gesamtgewicht 0,3 Gewichts-% oder mehr an α-Lactalbumin enthält;
das Abkühlen des sterilisierten Joghurtgemischs; und
das Fermentieren des abgekühlten Joghurtgemischs,
**dadurch gekennzeichnet, dass** es sich bei dem Ultrahochtemperatur-Sterilisationsprozess um einen Prozess handelt, in dem das Joghurtgemisch für 1 Sekunde bis 5 Minuten auf eine Temperatur von 120 bis 140 Grad Celsius erhitzt wird.

2. Verfahren zur Herstellung von unterlegtem Joghurt nach Anspruch 1,
wobei die Zugabe von α-Lactalbumin zu einem Milch-Ausgangsgemisch derart erfolgt, dass das Joghurtgemisch basierend auf dessen Gesamtgewicht 0,3 Gewichts-% oder mehr an α-Lactalbumin umfasst.

3. Verfahren zur Herstellung von unterlegtem Joghurt nach Anspruch 1 oder 2,
wobei das Joghurtgemisch des Weiteren fettfreie Milchtrockenmasse umfasst, wobei das Gewichtsverhältnis zwischen dem α-Lactalbumin und der fettfreien Milchtrockenmasse (α-La/SNF) 0,035 oder mehr beträgt.

4. Verfahren zur Herstellung von unterlegtem Joghurt nach einem der vorhergehenden Ansprüche,
wobei das Joghurtgemisch des Weiteren Molkenproteinkonzentrat umfasst, das bezogen auf den Gesamtproteingehalt 60 Gewichts-% oder mehr an α-Lactalbumin umfasst.

5. Verfahren zur Herstellung von unterlegtem Joghurt nach einem der vorhergehenden Ansprüche,
wobei es sich bei dem Ultrahochtemperatur-Sterilisationsprozess um einen Prozess handelt, in dem das Joghurtgemisch für 1,5 Sekunden bis 3 Sekunden auf eine Temperatur von 120 bis 140 Grad Celsius erhitzt wird.

6. Unterlegter Joghurt, hergestellt aus einem Joghurtgemisch anhand des Verfahrens zur Herstellung von unterlegtem Joghurt nach Anspruch 1 oder Anspruch 5, wobei das Joghurtgemisch 0,3 Gewichts-% oder mehr an α-Lactalbumin umfasst und entweder (i) fettfreie Milchtrockenmasse umfasst, wobei das Gewichtsverhältnis zwischen dem α-Lactalbumin und der fettfreien Milchtrockenmasse (α-La/SNF) 0,035 oder mehr beträgt, oder (ii) ein Gewichtsverhältnis zwischen α-Lactalbumin und β-Lactoglobulin zwischen 1,5 und einschließlich 4 aufweist, oder (iii) die in (i) und (ii) definierten Merkmale umfasst.

7. Unterlegter Joghurt nach Anspruch 6, wobei das Joghurtgemisch des Weiteren Molkenproteinkonzentrat umfasst, das bezogen auf den Gesamtproteingehalt 60 Gewichts-% oder mehr an α-Lactalbumin umfasst.

## Revendications

1. Procédé pour produire un yaourt de type ferme, le procédé comprenant les étapes de :
stérilisation d'un mélange de yaourt dans un processus de stérilisation à ultra haute température, le mélange de yaourt contenant 0,3 % en poids ou plus d'α-lactalbumine sur la base du poids total du mélange de yaourt ;
refroidissement du mélange de yaourt stérilisé ; et
fermentation du mélange de yaourt refroidi,
**caractérisé en ce que** le processus de stérilisation à ultra haute température est un processus pour chauffer le mélange de yaourt à une température de 120 à 140 degrés Celsius pendant 1 seconde à 5 minutes.

2. Procédé pour produire un yaourt de type ferme selon la revendication 1,
dans lequel une α-lactalbumine est ajoutée à un mélange de lait de départ de sorte que le mélange de yaourt comprend 0,3 % en poids ou plus d'α-lactalbumine sur la base du poids total du mélange de yaourt.

3. Procédé pour produire un yaourt de type ferme selon la revendication 1 ou la revendication 2,
dans lequel le mélange de yaourt comprend en outre de la matière sèche dégraissée du lait, le rapport pondéral entre l'α-lactalbumine et la matière sèche dégraissée du lait (α-La/SNF) étant de 0,035 ou plus.

4. Procédé pour produire un yaourt de type ferme selon l'une quelconque des revendications précédentes, dans lequel le mélange de yaourt comprend en outre un concentré de protéine de petit-lait qui comprend 60 % en poids ou plus d'une α-lactalbumine sur la base de la protéine totale.

5. Procédé pour produire un yaourt de type ferme selon l'une quelconque des revendications précédentes, dans lequel le processus de stérilisation à ultra haute température est un processus pour chauffer le mélange de yaourt à une température de 120 à 140 degrés Celsius pendant 1,5 seconde à 3 secondes.

6. Yaourt de type ferme produit à partir d'un mélange de yaourt par le procédé de production de yaourt de type ferme selon la revendication 1 ou la revendication 5, dans lequel le mélange de yaourt comprend 0,3 % en poids ou plus d'α-lactalbumine et soit (i) comprend de la matière sèche dégraissée du lait, le rapport pondéral entre l'α-lactalbumine et la matière sèche dégraissée du lait (α-La/SNF) étant de 0,035 ou plus, soit (ii) a un rapport pondéral entre l'α-lactalbumine et de la β-lactoglobuline qui est entre 1,5 et 4 ces limites incluses, soit (iii) comprend les particularités définies dans (i) et (ii).

7. Yaourt de type ferme selon la revendication 6, dans lequel le mélange de yaourt comprend en outre du concentré de protéine de petit-lait qui comprend 60 % en poids ou plus d'α-lactalbumine sur la base de la protéine totale.
